# EUROPEAN PATENT APPLICATION

(11) **EP 2 398 153 A2**
(43) Date of publication of application: **21.12.2011**
(21) Application number: 11170335.1
(22) Date of filing: 17.06.2011
(51) Int. Cl.: H04B 1/7075, H04B 1/7107

(54) **Improvements to reception of spread spectrum signals**

(30) Priority: 18.06.2010 GB 1010293; 31.05.2011 KR 20110051950
(71) Applicant: SAMSUNG ELECTRONICS CO., LTD., Suwon-si Gyeonggi-do 442-742 (KR)
(72) Inventor: Hadef, Mahmoud, 442-742 Gyeonggi-do (KR)
(74) Representative: Jenkins, Richard Gavin

(57) **Abstract**

A method and apparatus for improving speed of acquisition of spread spectrum signals in a satellite navigation system. The method includes receiving signals including the spread spectrum signal having a first spreading code; performing a correlation between the received signals and a composite code, the composite code including a superposition of the first spreading code and a second spreading code; detecting a plurality of peaks of the correlation; identifying at least one of the plurality of peaks that relates to the spread spectrum signal; and detecting the spread spectrum signal based on the at least one identified peak.

## Description

### BACKGROUND OF THE INVENTION

### 1. Field of the Invention

The present invention relates generally to the reception of spread spectrum signals in communications systems, and more particularly, but not exclusively, to a method and apparatus for improving acquisition speeds of spread spectrum signals in a satellite navigation system.

### 2. Description of the Related Art

The use of spread spectrum signals is well known in communications systems. For example, spread spectrum signals, and in particular, direct sequence spread spectrum signals, are commonly used in wireless systems such as satellite navigation systems, for example Global Positioning System (GPS), and in Code Division Multiple Access (CDMA) cellular wireless systems such as Universal Mobile Telecommunications System (UMTS) and IS-95.

A direct sequence spread spectrum signal is typically formed by multiplying a signal with a spreading code including a sequence of chips, wherein each chip typically has a binary value representing, for example, a modulation phase state, and the sequence of binary values in the spreading code typically is a pre-determined pseudo-random sequence that is known to a receiver of the spread spectrum signal. The multiplication of the signal with the spreading code is used to spread the spectrum of the original signal over a wider band. Several different signals may be spread to share the same wider band, allowing multiplexing of the signals in a CDMA system.

Upon reception, each spread spectrum signal is detected by correlating received signals with the spreading code appropriate to the signal to be received. In order to do this, the relative timing, i.e., a relative delay value, of the spreading code used in the correlation process on reception is synchronized with the respective incoming spread spectrum signal. In a satellite navigation system such as GPS, spread spectrum signals transmitted from each satellite or pseudo satellite will have a respective spreading code, and each spread spectrum signal has a respective delay value and also a frequency offset value, e.g., due to Doppler shift.

Determining a delay value and a frequency offset value for reception, i.e., detection of a spread spectrum signal, is typically part of an acquisition process that includes successive steps of coarse and fine acquisition. Acquisition may be aided by information, for example almanac and ephemeris information, relating to spreading codes, and the motion and position of satellites in a satellite navigation system. However, in so-called cold start acquisition, no information (neither almanac nor ephemeris) about satellites in view may be available. In this scenario, a search is performed to establish the spreading codes for visible satellites. Typically, reception proceeds in a blind manner where the receiver may have to scan all possible Pseudo Random Noise (PRN) spreading codes (typically 32 codes in the case of GPS) on a case by case basis, a correlation for each spreading code being performed at each possible delay value and frequency offset value. Such a process may be critically time consuming and may considerably reduce receiver sensitivity. In fact, acquiring weak signals, as are often found in various scenarios such as indoor and urban areas, may require lengthy time integration periods and be vulnerable to interfering signals. Because neither the visible satellite PRN code nor the status of its signal (weak, medium, or strong) is known, the process can easily tend to an unacceptable Time To First Fix (TTFF).

### SUMMARY OF THE INVENTION

The present invention has been designed to address at least the problems and/or disadvantages above, and to provide at least the advantages described below.

In accordance with an aspect of the present invention, a method is provided for detecting a spread spectrum signal having a first spreading code. The method includes receiving signals including the spread spectrum signal having a first spreading code; performing a correlation between the received signals and a composite code, the composite code including a superposition of the first spreading code and a second spreading code; detecting a plurality of peaks of the correlation; identifying at least one of the plurality of peaks that relates to the spread spectrum signal; and detecting the spread spectrum signal based on the at least one identified peak.

In accordance with another aspect of the present invention, a spread spectrum receiver is provided for detecting a spread spectrum signal having a first spreading code. The receiver includes a receiver for receiving signals including the spread spectrum signal having a first spreading code; a correlator for performing a correlation operation between the received signals and a composite code, the composite code including a superposition of the first spreading code and a second spreading code; a peak detector for detecting a plurality of peaks of the correlation operation; and a controller for identifying at least one peak from among the plurality of peaks that relates to the spread spectrum signal, and detecting the spread spectrum signal based on the identified peak.

### BRIEF DESCRIPTION OF THE DRAWINGS

The above and other aspects, features, and advantages of certain embodiments of the present invention will be more apparent from the following detailed description taken in conjunction with the accompanying drawings, in which:
FIG. 1 is a schematic diagram illustrating a signal flow in accordance with an embodiment of the invention;
FIG. 2 is a flow chart illustrating an acquisition process in accordance with an embodiment of the invention;
FIG. 3 is a flow chart illustrating a method for estimating a contribution of a code to a correlation result according to an embodiment of the invention; and
FIG. 4 is a graph showing correlation results as a function of code delay and frequency according to an embodiment of the invention.
Figure 5 is a spread spectrum receiver for detecting a spread spectrum signal according to an embodiment of the invention.

### DETAILED DESCRIPTION OF EMBODIMENTS

Various embodiments of the present invention will now be described in detail with reference to the accompanying drawings. In the following description, specific details such as detailed configuration and components are merely provided to assist the overall understanding of embodiments of the present invention. Therefore, it should be apparent to those skilled in the art that various changes and modifications of the embodiments described herein can be made without departing from the scope and spirit of the invention. In addition, descriptions of well-known functions and constructions are omitted for the sake of clarity and conciseness.

More specifically, embodiments of the present invention will now be described in the context of a satellite navigation system, and in particular, a GPS system. However, it will be understood that this is by way of example only and that these and other embodiments are applicable to other spread spectrum communication systems, for example, cellular radio systems using CDMA.

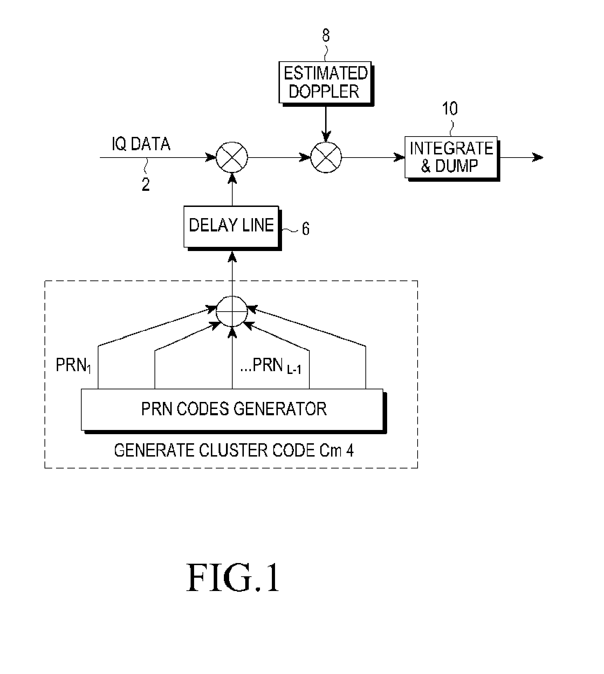

FIG. 1 illustrates a signal flow in a receiver during an acquisition process according to an embodiment of the present invention. Specifically, acquisition process is a part of a process of detection of spread spectrum signals.

Referring to FIG. 1, spread spectrum satellite signals are received and are converted to In phase (I) and Quadrature (Q) data components 2. A correlation operation is performed between the components of the received signals and a composite code, the composite code comprising a superposition of spreading codes for several satellites. This correlation operation with the composite code is performed instead of performing a separate correlation operation for the code for each spread spectrum satellite signal, as would be done conventionally. The correlation operation with the composite code will typically produce several correlation peaks; these peaks may be produced by a correlation between a received spread spectrum signal and one of the spreading codes in the composite code, or may be spurious cross-correlations or due to interference. Peaks of the correlation having at least a given value are detected, and the peaks are then identified as to which, if any, spread spectrum signal they correspond to.

The correlation operation may be performed for a succession of relative timing relationships between the composite code used in the correlation and the received signal, i.e., for a succession of delay values. The correlation operation may also be performed for a succession of Doppler frequency offset values for each delay value.

Each detected peak may be identified by performing a separate correlation with each of the spreading codes in the composite code. If the correlation is greater than a threshold value, the peak may be identified as relating to the signal having that spreading code. The threshold value may be expressed as a proportion of a sum of values of a correlation between the received signals and each spreading code that is a component of the composite code. This correlation with each separate spreading code is performed at the delay value and frequency offset value corresponding to the peak. Accordingly, fewer operations are involved in a process, according to an embodiment of the invention, involving correlating with a composite code for each possible delay and frequency offset value, and then correlating with individual spreading codes at only the delay and frequency offset values corresponding to detected peaks, than would be involved in a conventional process of separately correlating for each possible delay and frequency offset value of each individual spreading code in turn.

In searching through the detected peaks, typically, the peak having a highest correlation value is selected first for identification by correlation with the individual spreading codes. Each peak in turn is then selected; typically, in order of diminishing correlation value. This process may be continued until each of the spreading codes in the composite code has been associated with a peak, or until sufficient spread spectrum signals have been associated with peaks for the purposes of the receiver. which may be fewer than the number of spreading codes included in the composite code.

Once a spreading code has been identified as relating to a detected peak, that code may be removed from the composite code. Further, the signal relating to that code may be removed from, or reduced in, the incoming signals. This may be achieved by regeneration of the signal and subtraction from the incoming signals. This may reduce spurious cross-correlations, especially if the removed or reduced signal is greater in magnitude than signals that remain to be identified.

The composite code may be formed by superposition of the individual spread spectrum codes of the composite code by addition of respective chips of the codes. Each chip may have a positive or negative state, so that in a bi-phase modulated code, the state would typically correspond to zero or 180 degrees phase, which may be represented by 1 or -1.

Addition of respective chips then produces a multi-level code. For example, the addition of two codes would allow the states 2, 0, and -2 in the composite codes (note that the scale factor is arbitrary). The composite code would thus have both phase and amplitude modulated components. The phase and amplitude components may be used in the correlation with the incoming signal.

However, it may be advantageous in terms of simplicity of implementation to add the respective chips of the codes forming the composite code and then quantize the result to a binary value for each chip, so that the composite code is a binary code. This may be simpler in terms of hardware implementation and yet offer acceptable performance.

It is advantageous to use at least four spreading codes in the composite code, and often more advantageous to use eight or more spreading codes in the composite code. In a composite code including at least eight spreading codes, detecting five or fewer peaks of the cross-correlation is particularly advantageous.

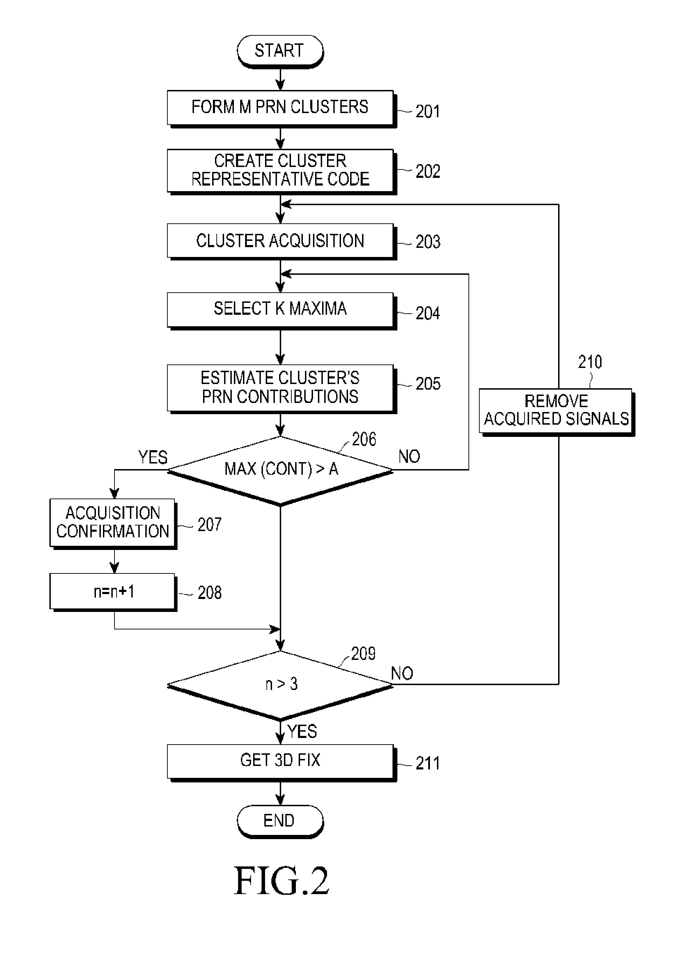

FIG. 2 is flow diagram illustrating an acquisition process in accordance with an embodiment of the invention, relating to the use of a set of spreading codes combined in a composite code. The acquisition process illustrated in FIG. 2 may be referred to as a cluster acquisition, or a cluster scan. The cluster relates to the set of spreading codes combined in a composite code.

A description of a cluster scan process according to an embodiment of the invention will be described with reference to FIGs. 1 and 2 below.

Referring to FIG. 2, 32 GPS PRN codes are arranged in M clusters in step 201. Each cluster includes L different GPS codes. It should be noted that typically the more satellites that are gathered in one cluster, the faster the acquisition achieved, but there is a lower the likelihood of detecting all visible satellites. The latter effect is due to the accumulation of cross correlations and to the strong to weak signal interferences. A particularly advantageous trade off for this process, which may be referred to as repartition, is to provide 4 clusters with 8 satellites each.

In step 202, a representative composite code Cm is generated of each cluster m (m=1, 2 ...M). The representative composite code is the sum (binary or decimal) of all PRN codes included in the cluster. The generation of the cluster code Cm 4 is illustrated in FIG. 1. Binary addition is more efficient in terms of implementation, but produces more noisy acquisition output than decimal, i.e., multi-level, addition.

In step 203, a two dimensional (2D) cluster acquisition process is performed. As illustrated in FIG. 1, cluster acquisition carried out for each representative composite code Cm. The dimensions are typically time, i.e., a delay value implemented by delay line 6, and frequency, i.e., a Doppler frequency offset, implemented by estimated Doppler generation 8. For each delay and Doppler frequency offset value, an integrate and dump function 10 is performed to produce a correlation value. In total only M acquisition searches are performed, instead of 32, compared to a conventional cold start search. The received IQ data 2 is correlated first with delayed version of the code Cm, and then compensated with an estimated Doppler frequency. Finally, the outcome is integrated and dumped over the whole coherent time integration epoch. Typically, this procedure may be carried out over all possible code delays and estimated Doppler frequencies.

In step 204, the first K maxima are selected from the 2D search outcome. A potential choice of K is the number of PRN codes forming the cluster (L). However, considering that the number of GPS satellites in view at any time on average is around 10 satellites, smaller values of K can be used. For example, when L=8, only 5 maxima could be picked up to cover all visible satellites on this cluster.

The selected peaks do not necessarily correspond to visible satellite autocorrelations; instead, the peaks could be caused by an accumulation of cross correlations of other PRN codes or strong signal interference. Accordingly, it is important to identify whether these peaks are due to the presence of a signal, and if this is the case, which PRN is responsible.

In step 205, contributions of PRN codes forming the cluster on each peak value are calculated.

After obtaining contributions, the percentage contₖ,ₗ is calculated and the maximum percentage max(cont) is identified. The decision of whether the signal is available or not may be made based on max(cont). If max(cont) is larger than a chosen threshold A, the signal is considered available. From simulation testing a particularly advantageous value for threshold A, in terms of a percentage contribution to a sum of correlations, is around 75%, for L=8.

In step 206, when max(cont) is greater than A, a further fine basic acquisition confirmation is carried out in step 207. If successful, the satellite PRN that produces the maximum contribution is declared as detected and the number of detected satellites n is incremented by one in step 208. It is noted that the minimum number of satellites required for a three dimensional (3D) mode fix is typically 4.

At step 206, when Max (cont) is not greater than A, step 207 may be omitted. In this case, the process may continue with the selection of the next maximum of the K maxima, and the process may continue iteratively for each of the M clusters. Once each of the M clusters has been selected, and up to K maxima have been selected for each cluster, the process may move to step 209.

In embodiments of the invention, in the case that Max (cont) is greater than A, the process may continue from updating the number of acquired PRNs, i.e. the number of acquired satellites, at step 208 to determining if at least 4 satellites have been detected at step 209.

In step 209, it is determined if at least 4 satellites have been detected. If less than 4 satellites have been detected, the already acquired signals are removed from the IQ data input in step 210, and the scan process returns to step 203 with the already detected PRNs removed from the list.

If at least 4 codes have been acquired, that is to say at least 4 satellites have been detected, a 3D fix is performed, that is to say a position is determined at step 211 using the GPS receiver based on the at least 4 satellites.

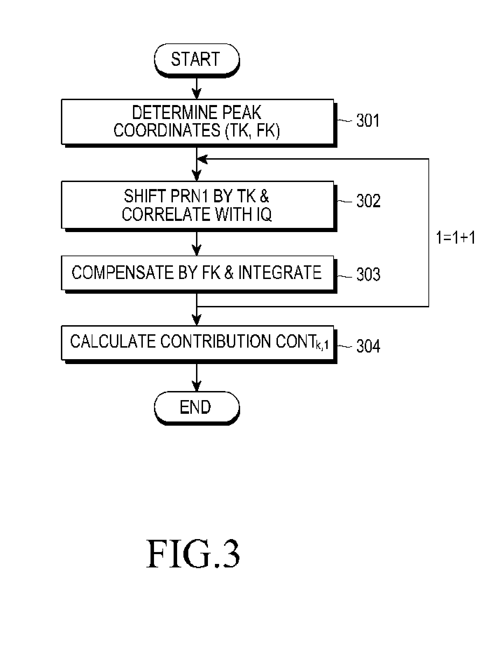

FIG. 3 illustrates a procedure of calculating contributions of PRN codes forming the cluster on each peak value, according to an embodiment of the present invention.

Referring to FIG. 3, in step 301, the coordinates of the peak value for peak k are determined in terms of code delay (tk) and Doppler frequency (fk). At step 302, the step being iterated for each code 1 of the L PRN codes making up the composite code, the PRN code is shifted by the code delay value of the peak, and this shifted code is correlated with the received IQ signal. At step 303, the correlation result of step 302 is compensated by the Doppler frequency and integrated. The contribution of each PRN code is then calculated at a respective step 304.

As previously indicated, the above-described embodiments of the present invention are also applicable for CDMA acquisition, where, conventionally, a set of PRN codes is searched sequentially.

As described above, embodiments of the present invention use a combined code, i.e., a composite code, which represents a set of PRN codes of different satellites. A cluster scan covers a set of PRN codes to detect, in one correlation process, several peaks, instead of one, and saves valuable time in processing. Accordingly, a search window may be used to gain valuable information regarding a set of satellites that may not be available using conventional acquisition techniques. Even though interference of strong signals can conventionally embed the weak ones and make them potentially invisible, searching according to an embodiment of the invention may result in useful data that can be used to extract weak signals with extra processing, by removing the strong signals.

The scan of a cluster may require little or no extra processing cost compared to the procedure of acquiring one satellite, such that the cluster scan method provides a cold start fix potentially L times faster than the conventional method.

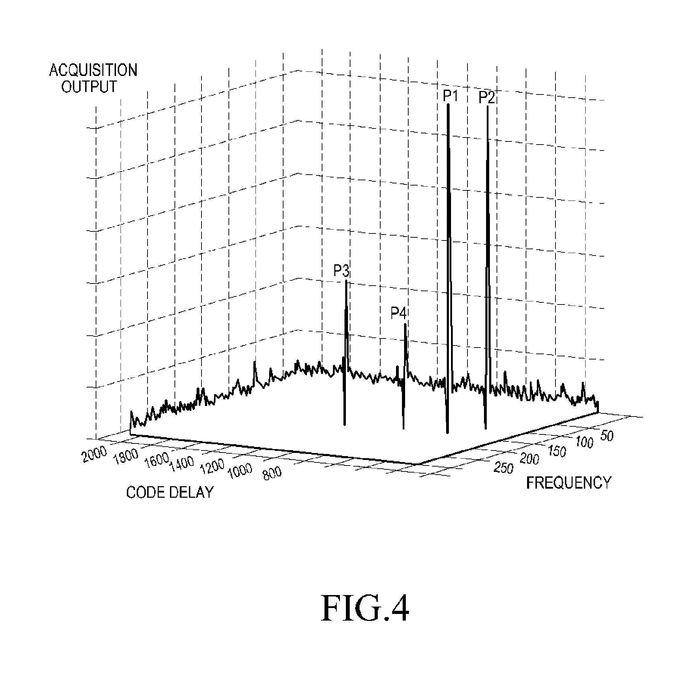

FIG. 4 is a graph showing correlation results as a function of code delay and frequency according to an embodiment of the invention.

Referring to FIG. 4, results have been obtained from GPS radio frequency data captured from a roof antenna and processed according to an embodiment of the invention. Two cold start acquisitions were performed using conventional method in a first search (not shown in FIG. 4) and a cluster scan according to an embodiment of the invention in a second search. The same integration configuration (8ms coherent integration and 4 non-coherent accumulations) were used in both searches.

Four clusters were generated where each set includes 8 satellites. FIG. 4 shows the 2D search output from the 2nd cluster scan, which includes four visible satellites. As can be seen from FIG. 4, four clear peaks are obtained from only one search output. The peaks coordinates have been confirmed after they have been compared with the conventional search results. This illustrates that a cluster scan according to an embodiment of the present invention is able to acquire four satellites (minimum requirement for 3D fix) in one operation, instead of 8 separate searches with the same configuration settings, thereby providing around an 8 times faster process than a conventional acquisition search.

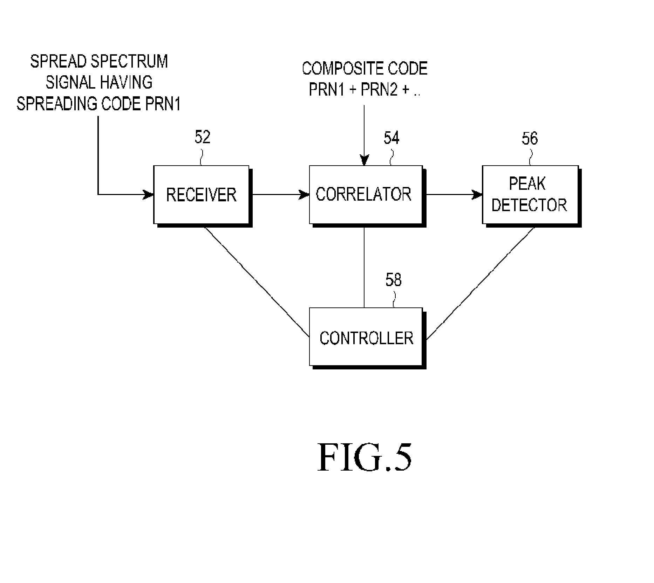

Figure 5 shows a spread spectrum receiver for detecting a spread spectrum signal according to an embodiment of the invention. The spread spectrum receiver comprises a receiver 52 for receiving signals including the spread spectrum signal having a first spreading code PRN1; a correlator 54 for performing a correlation operation between the received signals and a composite code, the composite code including a superposition of the first spreading code PRN1 and a second spreading code PRN2; a peak detector 56 for detecting a plurality of peaks of the correlation operation; and a controller 58 for identifying at least one peak from among the plurality of peaks that relates to the spread spectrum signal, and detecting the spread spectrum signal based on the identified peak.

While the present invention has been shown and described with reference to certain embodiments thereof, it will be understood by those skilled in the art that various changes in form and details may be made therein without departing from the spirit and scope of the present invention as defined by the appended claims and their equivalents.

## Claims

1. A method of detecting a spread spectrum signal, the method comprising:
receiving signals including the spread spectrum signal having a first spreading code;
performing a correlation between the received signals and a composite code, the composite code including a superposition of the first spreading code and a second spreading code;
detecting a plurality of peaks of the correlation;
identifying at least one of the plurality of peaks that relates to the spread spectrum signal; and
detecting the spread spectrum signal based on the at least one identified peak.

2. A method according to claim 1, further comprising:
performing a correlation operation for a plurality of delay values, the delay values relating to a relative timing of the received signals with respect to the composite code and each detected peak having a corresponding delay value;
selecting a first peak from among the plurality of peaks;
determining a first correlation value of a correlation between the received signals and the first spreading code for a first delay value corresponding to the first peak; and
identifying the first selected peak as being related to the spread spectrum signal, when the first correlation value is greater than a threshold value.

3. A method according to claim 2, the method further comprising:
determining a second correlation value of a correlation between the received signals and the second spreading code for the first delay value corresponding to the first peak; and
determining the threshold value as a proportion of a sum of at least the first and second correlation values.

4. A method according to claim 3, further comprising:
determining a respective correlation value of a correlation between the received signals and each spreading code that is a component of the composite code for the first delay value corresponding to the first peak; and
determining the threshold value as a proportion of a sum of each respective correlation value.

5. A method according to any of claims 2 to 4, further comprising:
selecting another peak from among the plurality of peaks, when the first correlation value is not greater than the threshold value;
determining another correlation value of a correlation between the received signals and the first spreading code for a delay value corresponding to the another peak; and
identifying the another selected peak as being related to the spread spectrum signal, when the additional correlation value is greater than the threshold value.

6. A method of claim 5, further comprising selecting a peak having a highest correlation value with the composite code of the plurality of peaks that has not been previously selected as the another peak.

7. A method according to claim 6, comprising:
determining a second correlation value between the received signals and the second spreading code for the delay value corresponding to the first peak;
identifying the first selected peak as the further peak relating to the second spread spectrum signal, when the second value of the correlation between the received signals and the second spreading code are greater than a second threshold value, and when the second value of the correlation is being greater than the first correlation value; and
determining the second threshold value as a proportion of a sum of the first and second correlation values.

8. A method according to claim 6 or claim 7, comprising identifying the first peak as the further peak relating to the second spread spectrum signal, when the second correlation value is greater than the first correlation value by at least a margin value.

9. A method according to any preceding claim, comprising;
performing the correlation operation for a plurality of frequency offset values,
wherein each of the plurality of peaks has a corresponding frequency offset value; and
determining a value of the correlation between the received signals and the first spreading code for a first frequency offset value corresponding to the first peak.

10. A method according to any preceding claim, the method further comprising:
removing a spread spectrum signal relating to a previously identified peak from the received signals; and
removing a spreading code relating to a previously identified peak from the composite code.

11. A method according to any preceding claim, wherein the first and second spreading codes are pseudo-random binary codes each comprising a succession of chips, each chip having either a positive or a negative state, and
wherein the superposition of the first and second spreading codes forms the composite code by adding respective chips of the first and second spreading codes, such that the composite code is a multi-level code.

12. A method according to claim 10, wherein the superposition of the first and second spreading codes forms the composite code by adding respective chips of the first and second spreading codes and quantizing to a binary value for each chip, such that the composite code is a binary code.

13. A method according to any preceding claim, comprising detecting fewer peaks of the cross-correlation than a number of spreading codes included in the composite code.

14. A method according to any preceding claim, wherein the composite code includes a superposition of at least four spreading codes, or
wherein the composite code includes a superposition of a least eight spreading codes.

15. A method according to claim 14, comprising detecting five or fewer peaks of the cross-correlation,
wherein the spread spectrum signal is a navigation system signal.

16. A method according to any preceding claim, wherein the spread spectrum signal is a signal of a cellular radio communication system employing code division multiple access.

17. A spread spectrum receiver capable of detecting a spread spectrum signal having a first spreading code, the receiver being arranged to:
receive signals including the spread spectrum signal having a first spreading code;
perform a correlation operation between the received signals and a composite code, the composite code including a superposition of the first spreading code and a second spreading code;
detect a plurality of peaks of the correlation;
identify a peak from among the plurality of peaks that relates to the spread spectrum signal; and
detect the spread spectrum signal based on the identified peak.
